(19) Europäisches Patentamt / European Patent Office / Office européen des brevets

(11) **EP 2 153 625 B1**

(12) **EUROPEAN PATENT SPECIFICATION**

(45) Date of publication and mention
of the grant of the patent:
**29.08.2012 Bulletin 2012/35**

(51) Int Cl.:
*H04L 29/08* (2006.01)

(21) Application number: **08717878.6**

(86) International application number:
**PCT/EP2008/053141**

(22) Date of filing: **17.03.2008**

(87) International publication number:
**WO 2008/135304 (13.11.2008 Gazette 2008/46)**

(54) **MOBILE DEVICE FILE SHARING METHOD AND APPARATUS**

MOBILGERÄTE-DATEI-SHARING-VERFAHREN UND  VORRICHTUNG

PROCÉDÉ ET APPAREIL DE PARTAGE DE FICHIER DE DISPOSITIF MOBILE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **04.05.2007  US 744576**

(43) Date of publication of application:
**17.02.2010  Bulletin 2010/07**

(73) Proprietor: **Telefonaktiebolaget LM Ericsson (publ)**
**164 83 Stockholm (SE)**

(72) Inventors:
 • **SOUZA, Victor**
 **S-169 35 Stockholm (SE)**
 • **WELIN, Annikki**
 **S-171 60 Solna (SE)**

(74) Representative: **Åkerman, Mårten Lennart et al**
**Ericsson AB**
**Patent Unit Mobile Platforms**
**Nya Vattentornet**
**221 83 Lund (SE)**

(56) References cited:
 **EP-A- 1 587 282     WO-A-2006/053580**

 • WOLFGANG KELLERER ET AL: "Towards a Mobile Peer-to-Peer Service Platform" APPLICATIONS AND THE INTERNET WORKSHOPS, 2007. SAINT WORKSHOPS 2007. I NTERNATIONAL SYMPOSIUM ON, IEEE, PI, 1 January 2007 (2007-01-01), pages 2-2, XP031044094 ISBN: 978-0-7695-2757-4
 • MARCIN MATUSZEWSKI ET AL: "Social Distributed Hash Table" WIRELESS COMMUNICATIONS AND NETWORKING CONFERENCE, 2007.WCNC 2007. IEE E, IEEE, PI, 1 March 2007 (2007-03-01), pages 2812-2818, XP031097660 ISBN: 978-1-4244-0658-6

**Description**

BACKGROUND

The present invention generally relates to file sharing between mobile devices, and particularly relates to mobile device file sharing via an overlay network of computer nodes arranged according to a hierarchical Distributed Hash Table (DHT).

File sharing between mobile devices such as mobile phones, portable computers, PDAs, portable media players and the like is conventionally achieved by manual user interaction or by forming peer-to-peer (P2P) connections. Manual user interaction is tedious and often requires the end user to have advanced knowledge of the mobile device's file system and file transfer protocols such as FTP to transfer a file from one mobile device to another. P2P-based mobile device file sharing techniques utilize the computing power and bandwidth of the participating mobile devices rather than servers to form ad hoc connections between mobile devices. Files are transferred directly between mobile devices over the ad hoc connections. A mobile device simultaneously functions as both a client and server to other mobile devices participating in a P2P network.

Several factors adversely impact the performance, dependability and cost associated with conventional P2P mobile device file sharing networks. For example, a mobile device must 'know' or be aware of other mobile devices to share content. Correspondingly, significant processing and memory bandwidth is consumed maintaining links to other nodes in order to participate in a conventional P2P network. Further, P2P connections cannot be formed unless devices are connected to an accessible network such as the Internet. Mobile devices are often disconnected from the Internet when idle to reduce mobile network access charges. This is particularly true for mobile phones which use a packet-switched radio access network for network connectivity such as Wideband Code Division Multiple Access (WCDMA), Universal Mobile Telecommunications System (UMTS) or General Packet Radio Service / Enhanced GPRS (GPRS/EDGE). File transfers cannot be initiated with disconnected mobile devices using a conventional P2P network.

Mobile devices may also lack the processing power and memory bandwidth to reliably function as a P2P node. Further, the network access charges imposed on a mobile device for establishing P2P connections may be prohibitive, particularly for mobile phones which are charged based on the amount of network resources consumed. Breaks in a conventional P2P overlay network become more widespread as the number of participating mobile devices increases, e.g., due to intermittent radio service, low battery power, devices being powered off, etc. Yet another concern with conventional P2P networks is security. A mobile device that functions as a P2P node is more prone to security attacks since it directly communicates with other mobile devices. Many mobile devices cannot be trusted, yet files are transferred regardless. No intermediary device filters nefarious content in conventional P2P networks because the participating nodes interact directly with each other. As such, mobile devices are more prone to malicious attacks.

WO 2006/053580 describes information management in a network having temporary nodes and static nodes, wherein the static nodes store information profiles regarding shared files, the information profiles being distributed to the nodes based on a hash function and node identifiers of both the temporary nodes and the static nodes.

SUMMARY

According to the methods and apparatus taught herein, file sharing between mobile devices is enabled using a hierarchical Distributed Hash Table (DHT) based message routing system. Mobile devices do not form nodes within the message routing system. Instead, a separate overlay network of computer nodes is arranged according to the hierarchical DHT. Each computer node included in the overlay network maintains a set of links to neighbor nodes, thus forming logical 'rings' of computer nodes. The manner in which the computer nodes are linked is determined by the hierarchical DHT. Each computer node is responsible for a range of key values. The keys represent mobile device electronic content. In one embodiment, key values are generated by hashing at least part of the file name and/or file extension associated with mobile device electronic content.

Mobile devices register, deregister and request mobile device electronic content by sending file sharing messages to the overlay network. The messages are routed through the overlay network based on the key value included in the messages. The computer node responsible for a particular key value maintains records identifying mobile devices that have registered electronic content corresponding to the key value. However, registered electronic content remains locally stored at the mobile devices. To retrieve registered electronic content, the overlay network provides mobile device identification information such as mobile phone numbers to a device requesting the registered electronic content. The requesting device uses the mobile device identification information to contact one or more mobile devices storing the desired content. The electronic content is then transferred over a connection such as an IP formed between the mobile devices independent of the overlay network. Thus, the overlay network provides a mechanism for identifying the location of shared mobile device electronic content based on a hierarchical DHT, but the overlay network does not store the electronic content.

Hence, according to the attached independent claims, there is provided a method in a mobile device, a mobile device, a method in a network and a network. Preferred embodiments are defined in the dependent claims.

Of course, the present invention is not limited to the above features and advantages. Those skilled in the art will recognize additional features and advantages upon reading the following detailed description, and upon viewing the accompanying drawings.

BRIEF DESCRIPTION OF THE DRAWINGS

Figure 1 is a block diagram of one embodiment of a mobile device file sharing network.

Figure 2 is a block diagram of an embodiment of an overlay network of computer nodes included in the file sharing network of Figure 1.

Figure 3 is a block diagram of one embodiment of a mobile device file sharing message.

Figure 4 illustrates an embodiment of processing logic for generating and transmitting a mobile device file sharing message.

Figure 5 illustrates an embodiment of processing logic for processing a mobile device file sharing message.

Figure 6 illustrates an embodiment of processing logic for routing a mobile device file sharing message.

Figure 7 is a block diagram of another embodiment of a mobile device file sharing network.

DETAILED DESCRIPTION

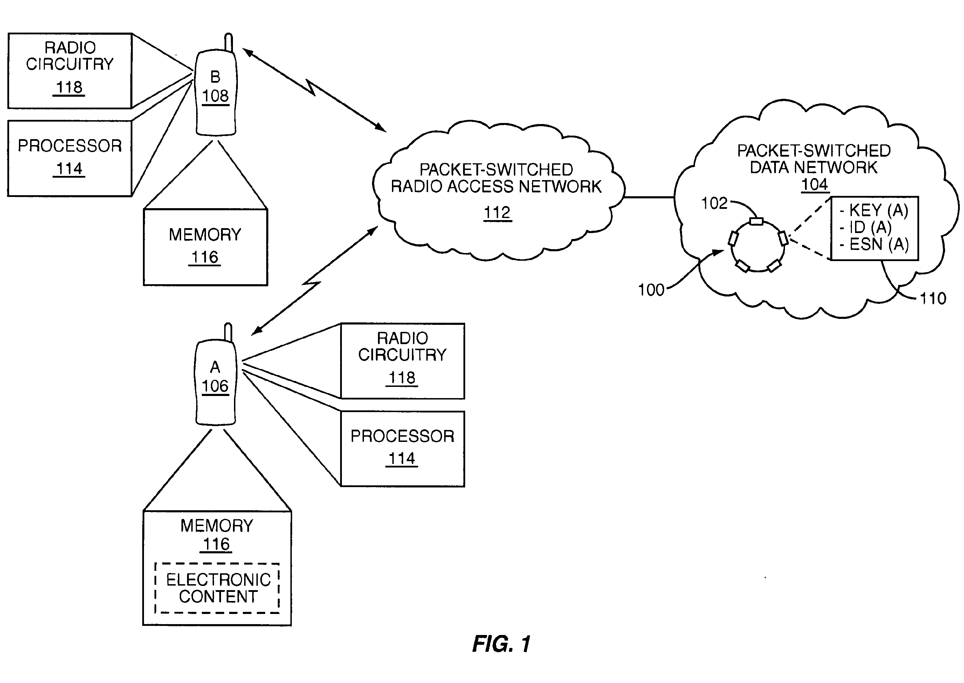

Figure 1 illustrates an embodiment of an overlay network 100 of computer nodes 102 (e.g., servers) arranged according to a hierarchical Distributed Hash Table (DHT). All or part of the overlay network 100 is dispersed throughout a packet-switched data network (PSDN) 104 such as the Internet. Each computer node 102 included in the overlay network 100 maintains a set of links (i.e., a routing table) to neighbor nodes 102, thus forming logical 'rings' of computer nodes. The overlay network 100 is hierarchical in that lower-level rings (not shown) such as those managed by different network operators are logically collapsed into a single, merged ring as will be described in more detail later. The manner in which the computer nodes 102 are linked is determined by the hierarchical DHT. Each computer node 102 is responsible for a range of key values. Messages are routed within individual rings and between rings based on the key included in the messages. A message is processed by the computer node 102 responsible for the key included in the message.

Electronic content stored locally by mobile devices 106, 108 may be shared by registering the content with the overlay network 100 of computer nodes 102. Electronic content may be reregistered each time the mobile devices 106, 108 power on to account for mobile device configuration changes such as a new phone number. Electronic content is registered by sending a message to one or more computer nodes 102 included in the overlay network 100. The message identifies the mobile device 106, 108 that stores the electronic content to be shared and a key identifying the content. The message is routed based on the hierarchical DHT to the computer node 102 responsible for the key included in the message. The electronic content is registered by the computer node 102 responsible for the key included in the message by creating a record 110 including the mobile device identifier (ID) and key retrieved from the message.

This way, mobile device electronic content may be shared by sending the appropriate messages to the overlay network 100. The records 110 maintained by the overlay network 102 provide information for contacting mobile devices 106, 108 that have registered electronic content. However, the electronic content is not stored in the overlay network 100. Instead, shared electronic content remains locally stored at the mobile devices 106, 108 that registered the content. Once registered, the electronic content is available for subsequent distribution directly from the mobile devices 106, 108. If access to registered electronic content is requested, the overlay network 100 provides to the requesting device the identity of the mobile device 106, 108 storing the desired electronic content. The requesting device may use the contact information received from the overlay network 100 to directly contact the mobile device 106, 108 storing the electronic content and request access to the content.

For example, electronic content stored locally at a first mobile device 106 is shared by registering the electronic content with the overlay network 100. The first mobile device 106 registers the electronic content by generating a message identifying the first mobile device (ID(A)) and the content to be shared. In one embodiment, the electronic content is identified by hashing at least part of the filename and/or file extension of the electronic content to be shared. The hash value functions as a key (key(A)) for routing the message to the computer node 102 responsible for the key. The message is transmitted from the first mobile device 106 to a packet-switched Radio Access Network (RAN) 112 servicing the device 106. The packet-switched RAN 112 sends the message to one or more of the computer nodes 102 included in the overlay network 100 which are maintained by or otherwise associated with the packet-switched RAN 112. Upon entering the overlay network 100, the message is routed to the responsible computer node 102 based on the key included in the message.

The responsible computer node 102 processes the message by generating a record 110 including the information provided in the message (key(A), ID(A), etc.). This way, the location of the registered electronic content is readily available when other devices request access to the same electronic content. For example, a second mobile device 108 requests access to the electronic content previously registered by the first mobile device 106. The second mobile device 108 generates a message identifying the desired electronic content. The desired electronic content may be identified by hashing at least part of the filename and/or file extension of the desired electronic content. The hash value is included in the message and transmitted to the same packet-switched RAN 112 or a different RAN (not shown). Regardless, the message is eventually routed to the responsible computer node 102 in the overlay network 100 based on the key value. The responsible computer node 102 performs a record lookup based on the key included in the message. Because the identical key was previously registered by the first mobile device 106, the responsible computer node 102 sends a reply message to the second mobile device 108.

The reply message includes the identity of the first mobile device 106 (ID(A)). The second mobile device 108 may then directly contact the first mobile device 106 using the identifier included in the reply message. The first mobile device 106 may not be connected to the PSDN 104 when contacted by the second mobile device 108. Accordingly, the first mobile device 106 may be instructed to establish a network connection. The cost associated with forcing the first mobile device 106 to establish a network connection may be charged to the second mobile device 108. Regardless, the IP address allocated to the first mobile device 106 when the network connection is established is provided to the second mobile device 108. A network connection is then formed between the two mobile devices 106, 108 using the IP address of the first device 106. The electronic content stored by the first mobile device 106 is transferred over the IP connection to the second mobile device 108, e.g., using the IP messaging protocol. Thus, the overlay network 100 provides a mechanism for identifying the location of shared mobile device electronic content based on a hierarchical DHT, but the overlay network 100 does not store the electronic content.

In more detail, the mobile devices 106, 108 may comprise any type of mobile device such as a mobile phone, portable computer, PDA, portable media player and the like having access to the PSDN 104 via a packet-switched interface such as GPRS/EDGE, UMTS, WCDMA, etc. The mobile devices 106, 108 share locally stored electronic content such as text files, source code, program code, image files, audio files, multimedia files and the like based on file sharing messages sent between the mobile devices 106, 108 and the overlay network 100. File sharing messages are routed in the overlay network 100 based on a hierarchical DHT. The number of different hierarchical levels represented by the overlay network 100 depends on the size of the network and number of subscribers, among other considerations.

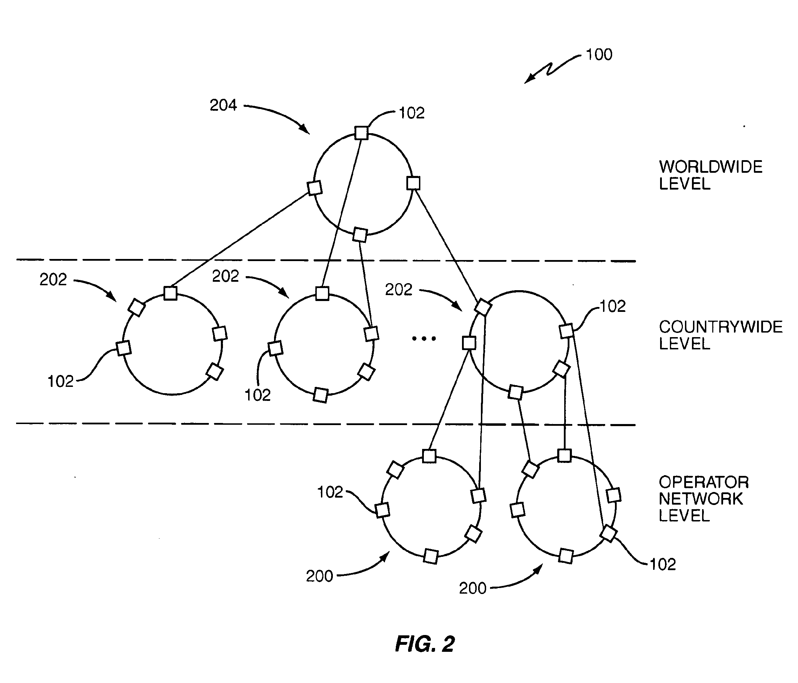

Figure 2 illustrates one embodiment of the overlay network 100. According to this embodiment, each participating network operator maintains a local ring 200 of computer nodes 102. Each local ring 200 may be maintained remotely from the operator's network 112 or may be included in the network 112 as will be described in more detail later. Regardless, each local ring 200 includes a plurality of computer nodes 102 each assigned a range of key values. Messages are routed within the local rings 200 based on the key value included in the messages. The local rings 200 are collapsed into geographic-centric rings 202, e.g., based on country codes as defined by the ITU Telecommunication Standardization Sector's recommendation E.164. This way, the local rings 200 associated with the same country code are collapsed into a single countrywide ring 202.

Each countrywide ring 202 is a logical representation of the computer nodes 102 included in the local network operator rings 200 that form the countrywide ring 202. That is, no new computer nodes 102 are created or added at the countrywide level. Instead, new links are formed between computer nodes 102 at the countrywide level. This way, messages may be routed at the countrywide level and between the network operator level and the countrywide level. The countrywide rings 202 may be further collapsed into a single, merged worldwide ring 204. The worldwide ring 204 has links to the lower-level countrywide rings 202. This way, messages are easily routed between each of the levels represented by the overlay network 100. Additional levels may be included. In other embodiments, the local rings 200 are further segmented based on locality, e.g., by postal code, state, province, area code, etc. Regardless, the links used to form the overlay network 100 are based on a hierarchical DHT representing any number of desired levels.

In one embodiment, the hierarchical DHT used to arrange the overlay network 100 is based on the Canon framework. That is, the hierarchical DHT may be Crescendo-based for Chord rings, Cacophony-based for Symphony rings, Can-Can-based for CAN rings or Kandy-based for Kademlia rings. According to the Canon framework, computer nodes 102 included in two different rings (e.g., two different local network operator rings 200) retain their original links when the two rings are merged. In addition, each computer node $m$ in one ring creates a link to a computer node $m'$ in the other ring if and only if equations (1) and (2) below are satisfied:

$$m' \text{ is the closest node that is at least distance } 2^k \text{ away for some } 0 \le k < N$$

$$(1)$$

$$m' \text{ is closer to } m \text{ than any node in } m\text{'s ring}$$

(2)

where k is a node index and N is the total number of participating computer nodes. Equation (1) is the standard Chord rule for creating links, applied to the union of the nodes in the two rings. Equation (2) further requires computer node $m$ to create only a subset of the links, specifically, only the links to those nodes closer to $m$ than any other node in $m$'s ring. Messages are routed to the responsible computer node 102 in approximately O(log$M$) hops based on the Canon framework, where $M$ is the total number of participant computer nodes. Further, the routing table used by the overlay network 100 to route file sharing messages is approximately O(log$M$) in size. Of course, other hierarchical DHTs may be used to enable mobile device file sharing. Turning now to the mobile devices 106, 108, each device 106, 108 includes a processor 114, memory 116 and radio circuitry 118. The processor 114 generates and processes file sharing messages, e.g., by executing software such as a daemon stored in memory 116. The radio circuitry 118 transmits and receives file sharing messages to and from the packet-switched RAN 112 and may include components such as a transceiver, frequency converter, demodulator, etc. The memory 116 stores electronic content. The mobile device processor 114 generates three basic file sharing message types - content registration messages, content deregistration messages, and content request messages. The mobile device processor 114 also processes reply messages received from the overlay network 100.

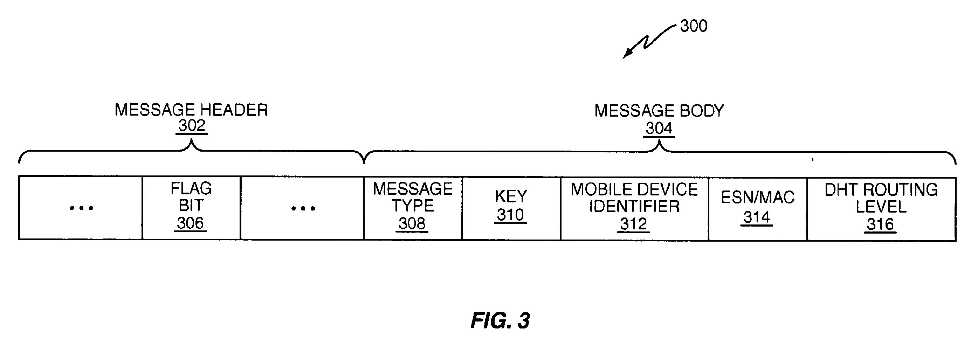

Figure 3 illustrates one embodiment of an exemplary file sharing message 300. The message 300 includes a header 302 and a body 304. The message 300 can be based on the Short Message Service (SMS), Multimedia Messaging Service (MMS), and/or Enhanced Messaging Service (EMS). The header 302 is modified to include a flag bit or other indicator 306. The flag bit or other indicator 306 indicates to the packet-switched RAN 112 that the message 300 is not a conventional SMS, MMS or EMS message, respectively. Instead, the flag bit or other indicator 306 indicates the message 300 is related to file sharing. The packet-switched RAN 112 sends file sharing messages generated by the mobile devices 106, 108 to one or more of the computer nodes 102 included in the overlay network 100. The file sharing messages are then routed within the overlay network 100 based on the key included in the messages. Similarly, the packet-switched RAN 112 sends file sharing messages received from one or more of the computer nodes 102 included in the overlay network 100 to the identified mobile devices 106, 108. Otherwise, the message is processed according to conventional approaches. This way, a preexisting messaging scheme such as SMS, MMS, or EMS is modified to accommodate mobile device file sharing.

The message body 304 includes information enabling mobile device file sharing when the flag bit or other indicator 306 is set. A message type field 308 included in the message body 304 indicates message type, e.g., content registration, deregistration, request or reply. A key field 310 is included for content registration, deregistration, and request messages. The key field 310 contains the key generated from the electronic content being registered, deregistered or requested, respectively. A mobile device identifier field 312 contains the identity of the mobile device 106, 108 attempting to register or deregister electronic content. The mobile device identifier field 312 is also included in a reply message for identifying the mobile device 106, 108 that stores electronic content requested by another mobile device.

A second identifier field 314 contains the Electronic Serial Number (ESN) or Media Access Control (MAC) address associated with a mobile device 106, 108. The second identifier field 314 is used by the overlay network 100 to maintain previously created records 110. For example, if the SIM card included in a mobile phone 106, 108 is changed, the second identifier field 314 enables the overlay network 100 to recognize that electronic content has already been registered by the mobile phone 106, 108. Accordingly, only the new mobile phone number is updated in the preexisting record 110 instead of creating a new record 110.

A routing level field 316 is included in content request messages for indicating the hierarchical DHT level beyond which key searching is not permitted. The routing level field 316 may be used to limit the cost associated with searching for electronic content. For example, a mobile device user may limit key searching to the local ring managed by the user's network operator (e.g., one of the local rings 200 illustrated in Figure 2). This way, the user does not incur costs associated with searching outside the operator's network 112. Alternatively, key searching may be allowed at the countrywide or worldwide levels illustrated in Figure 2. The routing level field 316 also improves security when used to limit key searching to a known ring of computer nodes 102, e.g., the local ring 200 maintained by the mobile device user's network operator. Security is provided in that electronic content may only be retrieved from mobile devices 106, 108 permitted access to a particular operator network 112 when key searching is limited to the operator's network 112. Mobile device file sharing is enabled based on the content registration, deregistration, request and reply message types. Of course, other file sharing message types may be supported such as acknowledgment messages, error messages, etc. For ease of explanation only, a detailed description of the four message types is provided next with reference to the first mobile device 106 shown in Figure 1 registering electronic content and the second mobile device 108 subsequently requesting access to the registered content. Of course, any number of mobile devices 106, 108 may participate in file sharing. In fact, the hierarchical DHT-based file sharing teachings disclosed herein are well suited for accommodating large numbers of mobile devices 106, 108.

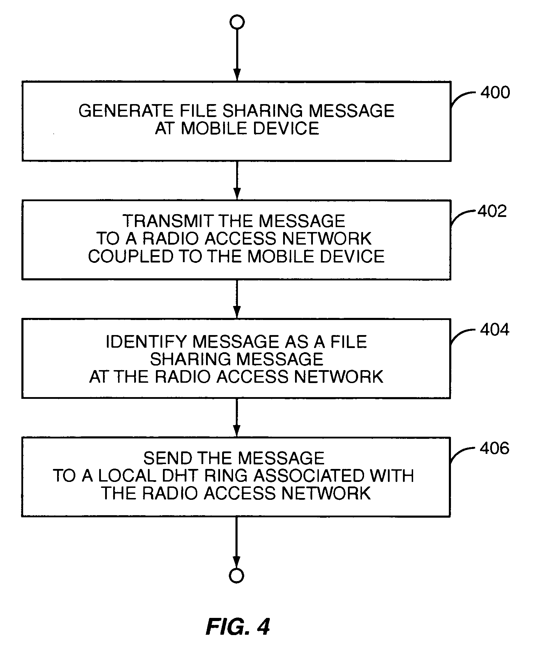

With this in mind, the processor 114 included in the first mobile device 106 generates a content registration message automatically or in response to user action, e.g., as illustrated by Step 400 of Figure 4. In one embodiment, the message is automatically generated when the electronic content is newly listed in a predetermined file folder associated with shared electronic content, e.g., a public file folder or the like. Regardless, the processor 114 includes a key in the key field 310 of the content registration message for identifying the electronic content. In one embodiment, the key is generated by hashing at least part of the filename and/or file extension of the shared content, e.g., using the MD, SHA or other hash algorithm. A device identifier (ID) is included in the device identifier field 312 for uniquely identifying the first mobile device 106. In one embodiment, the identifier is the phone number of the first mobile device 106 if the device 106 is a mobile phone. In another embodiment, the IP address of the first mobile device 106 is provided. The processor 114 also sets the flag bit or other indicator 306 in the message header 302 so that the packet-switched RAN 112 identifies the message as a file sharing message. Regardless, the content registration message is then transmitted to the packet-switched RAN 112 by the radio circuitry 118 included in the first mobile device 106, e.g., as illustrated by Step 402 of Figure 4. The packet-switched RAN 112 recognizes the message as a file sharing message by inspecting the flag bit or other indicator 306, e.g., as illustrated by Step 404 of Figure 4. Accordingly, the packet-switched RAN 112 sends the message to one of the computer nodes 102 included in the overlay network 100, e.g., as illustrated by Step 406 of Figure 4. The message may be sent to the overlay network 100 using any conventional packet-based messaging protocol such as IP. Preferably, the packet-switched RAN 112 sends the message to a computer node 102 maintained by or otherwise associated with the RAN 112.

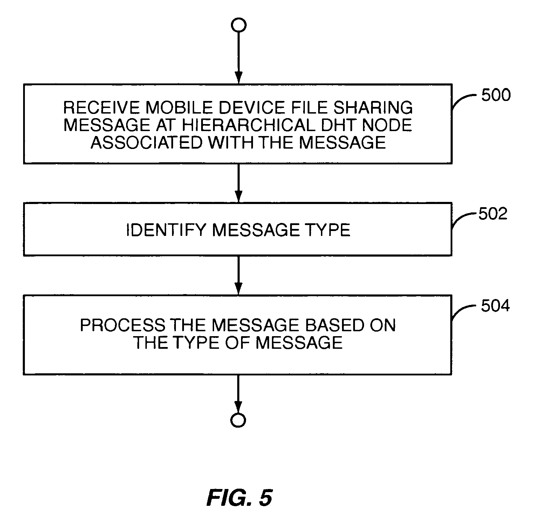

The content registration message is routed over the overlay network 100 to the computer node 102 responsible for the key value included in the message, e.g., as illustrated by Step 500 of Figure 5. The responsible computer node 102 inspects the message type field 308 and determines that the message is a content registration message, e.g., as illustrated by Step 502 of Figure 5. Correspondingly, the responsible computer node 102 generates a record 110 associated with the message, e.g., as illustrated by Step 504 of Figure 5. The record 110 identifies the key and device identifier (ID) extracted from the received message as well as any other information included in the message such as the ESN or MAC address associated with the first mobile device 106.

The electronic content is available for distribution after it has been registered. For example, the second mobile device 108 may request access to the electronic content. The processor 114 included in the second mobile device 108 generates a content request message identifying the newly shared content, e.g., as illustrated by Step 400 of Figure 4. The key included in the content request message matches the key stored in the record 110 previously created by the overlay network 100. The routing level field 316 included in the message body 304 may be set to indicate the highest level at which key searching is permitted. The flag bit or other indicator 306 is set to indicate the message is a file sharing message. The content request message is then transmitted to the packet-switched RAN 112 by the radio circuitry 118 included in the second mobile device 108, e.g., as illustrated by Step 402 of Figure 4. The packet-switched RAN 112 recognizes the message as a file sharing message by inspecting the flag bit or other indicator 306, e.g., as illustrated by Step 404 of Figure 4. Accordingly, the packet-switched RAN 112 sends the message to one or more of the computer nodes 102 included in the overlay network 100, e.g., as illustrated by Step 406 of Figure 4.

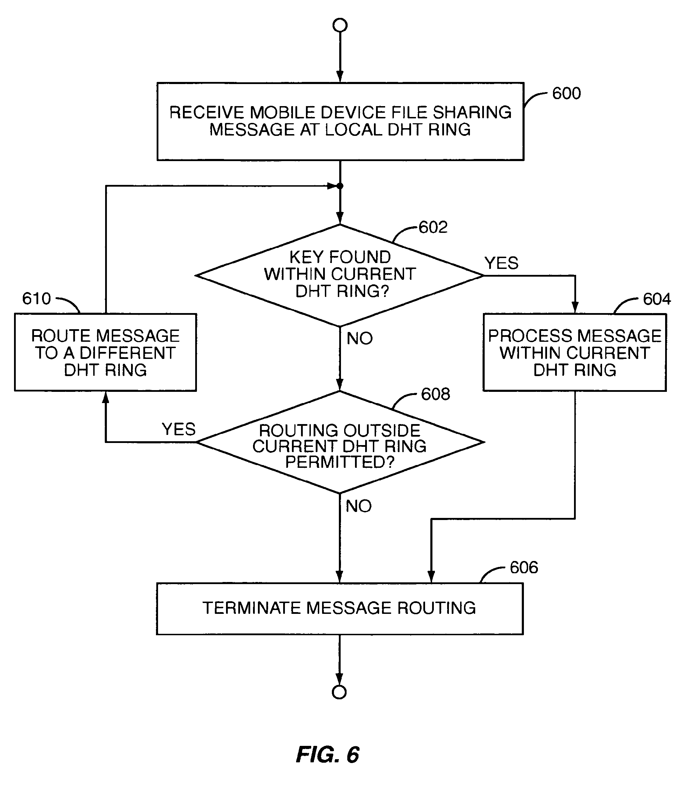

The content request message is received by the computer node 102 coupled to the packet-switched RAN 112, e.g., as illustrated by Step 600 of Figure 6. The local ring including the computer node 102 that received the message determines whether the key included in the message is stored by the local ring, e.g., as illustrated by Step 602 of Figure 6. If the local ring maintains the key, the message is processed by the responsible computer node 102 and message routing is terminated, e.g., as illustrated by Steps 604 and 606 of Figure 6. In this example, a previous record 110 was created having a matching key value. Accordingly, a reply message is generated by the responsible computer node 102 and sent to the second mobile device 108 as part of processing the content request message. The reply message includes the identifier for the first mobile device 106 which can be used by the second mobile device 108 to contact the first device 106.

The local ring of computer nodes determines whether the message may be routed outside the local ring if none of the computer nodes 102 is responsible for the key included in the message, e.g., as illustrated by Step 608 of Figure 6. The routing level field 316 included in the message body 304 is inspected to determine whether the message may be routed outside the local ring if the computer node responsible for the key does not have a record matching the key included in the message, e.g., to one of the countrywide rings 202 shown in Figure 2. The content request message is routed outside the local ring if higher-level routing is permitted, e.g., as illustrated by Step 610 of Figure 6. Otherwise, routing is terminated, e.g., as illustrated by Step 606 of Figure 6. A reply message is sent to the second mobile device 108 indicating no matching key was found when message routing is terminated before a record 110 having a matching key is found. The reply message is routed to the computer node 102 associated with the packet-switched RAN 112 and then transmitted from the RAN 112 to the second mobile device 108.

The first mobile device 106 may deregister the shared electronic content by sending a content deregistration message to the RAN 112. The mobile device identifier field 312 included in message body 304 identifies the first mobile device 106. The key field 310 identifies the electronic content to be deregistered. Electronic content may be deregistered automatically, e.g., in response to the electronic content being deleted or removed from a public folder. Alternatively, a user may manually deregister shared electronic content by initiating a deregistration routine. Regardless, the content deregistration message is transmitted to the packet-switched RAN 112 which sends the message to the overlay network 100. The computer node 102 responsible for the key eventually receives the deregistration message and deletes the record 110 associated with the mobile device identifier included in the message.

Each computer node 102 coupled to or otherwise associated with the packet-switched RAN 112 may be remotely located or locally maintained by the RAN 112. Each computer node 102 coupled to or otherwise associated with the RAN 112 provides a communication bridge for the flow of file sharing messages between the mobile devices 106, 108 and the overlay network 100. The RAN 112 communicates with remote computer nodes 102 using a packet-based communication protocol such as IP as is well known in the art. Alternatively, the RAN 112 locally maintains one or more of the computer nodes 102 forming part of the overlay network 100.

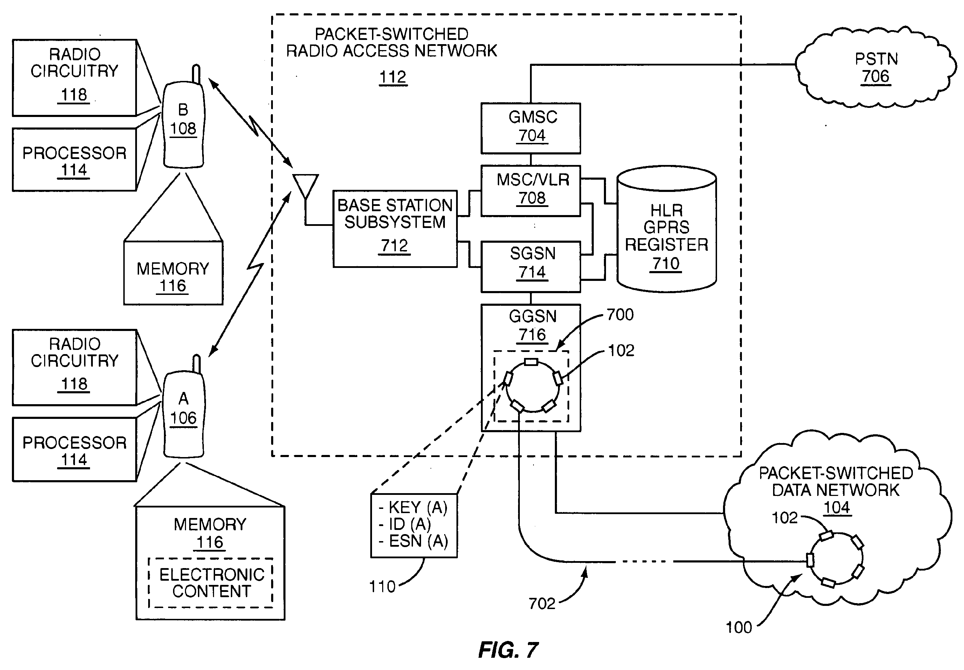

Figure 7 illustrates an embodiment of the packet-switched RAN 112 where a local ring 700 of computer nodes 102 is locally maintained by the RAN 112. The local ring 700 has one or more links 702 to remote computer nodes 102 included in the overlay network 100. This way, the local ring 700 forms part of the hierarchical DHT overlay network 100 while also functioning as a messaging interface between the RAN 112 and the overlay network 100.

According to this embodiment, the packet-switched RAN 112 comprises a GPRS/EDGE-based RAN. However, the RAN 112 may conform to other radio access topologies such as WCDMA, UMTS or a High-Speed Packet Access (HSPA) mobile telephony protocol. The RAN 112 includes a GSM Gateway Mobile Switching Center (GMSC) 704 for providing a gateway between the RAN 112 and the Public-Switched Telephone Network (PSTN) 706. The RAN 112 also includes a Mobile services Switching Center (MSC) and a Visitor Location Register (VLR) 708 for supporting circuit-switched communication. The MSC/VLR 708 performs circuit switching functions, provides connections to the PSTN 706, and contains subscriber information necessary for providing circuit switched services. A central database 710 maintains the Home Location Register (HLR) which contains information associated with each mobile phone subscriber authorized to use the RAN 112.

The RAN 112 further includes complimentary components for supporting packet switched communication. A radio access node 712 such as a Base Station Subsystem (BSS) handles traffic and signaling between the mobile devices 106, 108 and the RAN 112. The BSS 712 transcodes speech channels, allocates radio channels, performs paging, manages quality of transmission and reception over the air interface and many other tasks related to the RAN 112 as is well known in the art. A first packet-switched communication support node 714 such as a Serving GPRS support node (SGSN) controls connections between the RAN 112 and the mobile devices 106, 108. The SGSN 714 performs session management and GPRS mobility management such as handovers and paging. The SGSN 714 has access to a GPRS register maintained by the central database 710 which stores SGSN addresses and maintains GPRS subscriber data and routing information. A second packet-switched communication support node 716 such as a Gateway GPRS Support Node (GGSN) provides a gateway between the RAN 112 and the PSDN 104 and/or other GPRS networks (not shown). The GGSN 716 implements authentication and location management functions.

The GGSN 716 also maintains the local ring of computer nodes 700 included in the packet-switched RAN 112. The GGSN 716 directs file sharing messages to the local ring 700 for routing. Particularly, the GGSN 716 inspects messages received from mobile devices 106, 108 to determine whether the flag bit or other indicator 306 has been set to indicate that the messages are file sharing related. The GGSN 716 forwards received messages to the local ring 700 when the flag bit or other indicator 306 is set. The local ring 700 routes file sharing messages provided by the GGSN 716 based on the key included in the messages as previously described. If the computer node 102 responsible for the key in the local ring 700 has a record matching the key included in a particular message, the message is routed to a different ring external to the RAN 112 based on the hierarchical DHT. That is, if the message permits routing outside the local ring 700 maintained by the RAN 112, the message is routed to a different ring of computer nodes 102 included in the overlay network 100. File sharing messages are routed outside the local ring 700 according to a hierarchical DHT protocol in the application level. For example, a protocol such as IP can be used in the layer 3 level to route file sharing messages. Messages are routed through the overlay network 100 as previously described.

With the above range of variations and applications in mind, it should be understood that the present invention is not limited by the foregoing description, nor is it limited by the accompanying drawings. Instead, the present invention is limited only by the following claims.

**Claims**

**1.** A method of sharing mobile device electronic content via an overlay network (100) of computer nodes (102) arranged according to a hierarchical distributed hash table (DHT), comprising:

generating a message by a mobile device (106, 108), the message including a key (310) configured to identify mobile device electronic content and to enable routing of the message based on the hierarchical DHT through the overlay network upon reception of the message at any of the computer nodes; and

transmitting the message to a packet-switched radio access network (112), the packet-switched radio access network configured to send the message to one or more of the computer nodes, the method being **characterized in that**:

generating the message comprises generating a content request message configured to identify electronic content requested by the mobile device, and indicating in the content request message a level of the hierarchical DHT beyond which key searching is not permitted.

2. A mobile device (106, 108) for sharing mobile device electronic content via an overlay network (100) of computer nodes (102) arranged according to a hierarchical distributed hash table (DHT), comprising:

a processor (114) configured to generate a message including a key (310) configured to identify mobile device electronic content and to enable routing of the message based on the hierarchical DHT through the overlay network upon reception of the message at any of the computer nodes; and

radio circuitry (118) configured to transmit the message to a packet-switched radio access network (112), the packet-switched radio access network configured to send the message to one or more of the computer nodes, the mobile device being **characterized in that**:

the processor is configured to generate a content request message configured to identify electronic content requested by the mobile device, and configured to indicate in the content request message a level of the hierarchical DHT beyond which key searching is not permitted.

3. The mobile device of claim 2, wherein the processor is configured to generate a content registration message configured to identify the mobile device and electronic content stored by the mobile device which the mobile device is configured to share.

4. The mobile device of claim 3, wherein the processor is configured to automatically generate the content registration message responsive to a predetermined folder in the mobile device newly listing the electronic content.

5. The mobile device of claim 3, wherein the processor is further configured to regenerate the content registration message responsive to the mobile device powering on.

6. The mobile device of claim 2, wherein the processor is configured to generate a content deregistration message configured to identify the mobile device and electronic content stored by the mobile device which the mobile device is no longer configured to share.

7. The mobile device of claim 2, wherein the processor is configured to indicate whether key searching is permitted at a network operator level (200), a countrywide level (202) or a worldwide level (204).

8. The mobile device of claim 2, wherein the processor is further configured to process a reply message received from the overlay network, the reply message configured to indicate whether one or more of the computer nodes maintains a record matching the key.

9. The mobile device of claim 8, wherein the processor is configured to:

retrieve a mobile device identifier (312) from the reply message, the mobile device identifier configured to identify a mobile device storing electronic content indicated by the key;

generate a message directed to the mobile device identified by the mobile device identifier, the message configured to request access to the electronic content;

process a response received from the mobile device identified by the mobile device identifier, the response including an IP address identifying the mobile device that transmitted the response; and

process electronic content received over a network connection established between the mobile devices based on the IP address.

10. The mobile device of claim 2, wherein the mobile device comprises a mobile phone.

11. A method of sharing mobile device electronic content via an overlay network (100) of computer nodes (102) arranged according to a hierarchical distributed hash table (DHT), comprising:

processing at a packet-switched radio access network (112) a message generated by a mobile device (106, 108), the message including a key (310) configured to identify mobile device electronic content and to enable routing of the message based on the hierarchical DHT through the overlay network upon reception of the message at any of the computer nodes; and

sending the message to one or more of the computer nodes associated with the packet-switched radio access network, the method being **characterized in that**:

sending the message to one or more of the computer nodes comprises forwarding the message to a packet-switched communication support node (714, 716) included in the packet-switched radio access network, the packet-switched communication support node configured to form part of the overlay network and to route the message based on the key, and further comprising:

preventing the message from leaving the packet-switched radio access network responsive to the message indicating key searching is not permitted outside the packet-switched radio access network.

12. A packet-switched radio access network (112) for sharing mobile device electronic content via an overlay network (100) of computer nodes (102) arranged according to a hierarchical distributed hash table (DHT), comprising:

a radio access node (712) configured to receive a message generated by a mobile device (106, 108), the message including a key (310) configured to identify mobile device electronic content and to enable routing of the message based on the hierarchical DHT through the overlay network upon reception of the message at any of the computer nodes; and

a packet-switched communication support node (714, 716) configured to process the message and send the message to one or more of the computer nodes associated with the packet-switched radio access network, the packet-switched radio access network being **characterized in that**:

the packet-switched communication support node is further configured to form part of the overlay network and to route the message based on the key, and configured to prevent the message from leaving the packet-switched radio access network responsive to the message indicating key searching is not permitted outside the packet-switched radio access network.

13. The packet-switched radio access network of claim 12, wherein the packet-switched communication support node is configured to process a content registration message configured to identify the mobile device and electronic content stored by the mobile device which the mobile device is configured to share.

14. The packet-switched radio access network of claim 12, wherein the packet-switched communication support node is configured to process a content request message configured to identify electronic content requested by the mobile device.

15. The packet-switched radio access network of claim 12, wherein the packet-switched communication support node is configured to process a content deregistration message configured to identify the mobile device and electronic content stored by the mobile device which the mobile device is no longer configured to share.

16. The packet-switched radio access network of claim 12, wherein the packet-switched communication support node is further configured to process a reply message received from the overlay network, the reply message configured to indicate whether one or more of the computer nodes maintains a record matching the key.

**Patentansprüche**

1. Verfahren zum Teilen von elektronischem Inhalt für Mobilfunkgeräte mittels eines Overlay-Netzwerks (100) von Computerknoten (102), die gemäß einer hierarchischen verteilten Hash-Tabelle (DHT) angeordnet sind, umfassend:

Erzeugen einer Nachricht durch ein Mobilfunkgerät (106, 108), wobei die Nachricht einen Schlüssel (310) einschließt, der dafür konfiguriert ist, elektronischen Inhalt für Mobilfunkgeräte zu identifizieren und bei Empfang der Nachricht an einem beliebigen der Computerknoten die Leitweglenkung der Nachricht durch das Overlay-Netzwerk auf der Grundlage der hierarchischen DHT zu ermöglichen; und

Übertragen der Nachricht zu einem paketvermittelten Funkzugangsnetz (112), wobei das paketvermittelte Funkzugangsnetz dafür konfiguriert ist, die Nachricht an einen oder mehrere der Computerknoten zu senden, wobei das Verfahren **dadurch gekennzeichnet ist, dass**:

das Erzeugen der Nachricht umfasst: Erzeugen einer Inhaltsanforderungsnachricht, die dafür konfiguriert ist, durch das Mobilfunkgerät angeforderten elektronischen Inhalt anzugeben, und Identifizieren einer Ebene der hierarchischen DHT, jenseits derer Schlüsselsuche nicht erlaubt ist, in der Inhaltsanforderungsnachricht.

2. Mobilfunkgerät (106, 108) zum Teilen von elektronischem Inhalt für Mobilfunkgeräte mittels eines Overlay-Netzwerks (100) von Computerknoten (102), die gemäß einer hierarchischen verteilten Hash-Tabelle (DHT) angeordnet sind, umfassend:

einen Prozessor (114), der dafür konfiguriert ist, eine Nachricht zu erzeugen, die einen Schlüssel (310) einschließt, der dafür konfiguriert ist, elektronischen Inhalt für Mobilfunkgeräte zu identifizieren und bei Empfang der Nachricht an einem beliebigen der Computerknoten die Leitweglenkung der Nachricht durch das Overlay-Netzwerk auf der Grundlage der hierarchischen DHT zu ermöglichen; und
eine Funkschaltungsanordnung (118), die dafür konfiguriert ist, die Nachricht zu einem paketvermittelten Funkzugangsnetz (112) zu übertragen, wobei das paketvermittelte Funkzugangsnetz dafür konfiguriert ist, die Nachricht an einen oder mehrere der Computerknoten zu senden, wobei das Mobilfunkgerät **dadurch gekennzeichnet ist, dass**:

der Prozessor dafür konfiguriert ist, eine Inhaltsanforderungsnachricht zu erzeugen, die dafür konfiguriert ist, durch das Mobilfunkgerät angeforderten elektronischen Inhalt zu identifizieren, und dafür konfiguriert ist, in der Inhaltsanforderungsnachricht eine Ebene der hierarchischen DHT anzugeben, jenseits derer Schlüsselsuche nicht erlaubt ist.

3. Mobilfunkgerät nach Anspruch 2, worin der Prozessor dafür konfiguriert ist, eine Inhaltsregistrierungsnachricht zu erzeugen, die dafür konfiguriert ist, das Mobilfunkgerät und durch das Mobilfunkgerät gespeicherten elektronischen Inhalt, für das Teilen dessen das Mobilfunkgerät konfiguriert ist, zu identifizieren.

4. Mobilfunkgerät nach Anspruch 3, worin der Prozessor dafür konfiguriert ist, als Antwort darauf, dass ein vorbestimmter Ordner im Mobilfunkgerät neuerdings den elektronischen Inhalt auflistet, automatisch die Inhaltsregistrierungsnachricht zu erzeugen.

5. Mobilfunkgerät nach Anspruch 3, worin der Prozessor ferner dafür konfiguriert ist, als Antwort auf das Einschalten des Mobilfunkgeräts die Inhaltsregistrierungsnachricht zu regenerieren.

6. Mobilfunkgerät nach Anspruch 2, worin der Prozessor dafür konfiguriert ist, eine Inhaltsderegistrierungsnachricht zu erzeugen, die dafür konfiguriert ist, das Mobilfunkgerät und durch das Mobilfunkgerät gespeicherten elektronischen Inhalt, für das Teilen dessen das Mobilfünkgerät nicht mehr konfiguriert ist, zu identifizieren.

7. Mobilfünkgerät nach Anspruch 2, worin der Prozessor dafür konfiguriert ist, anzugeben, ob Schlüsselsuche auf einer Netzwerkbetreiberebene (200), einer landesweiten Ebene (202) oder einer weltweiten Ebene (204) erlaubt ist.

8. Mobilfunkgerät nach Anspruch 2, worin der Prozessor ferner dafür konfiguriert ist, eine vom Overlay-Netzwerk empfangene Antwortnachricht zu verarbeiten, wobei die Antwortnachricht dafür konfiguriert ist, anzugeben, ob einer oder mehrere der Computerknoten einen Datensatz verwaltet, der zum Schlüssel passt.

9. Mobilfunkgerät nach Anspruch 8, worin der Prozessor dafür konfiguriert ist
eine Mobilfunkgerätekennung (312) aus der Antwortnachricht abzurufen, wobei die Mobilfunkgerätekennung dafür konfiguriert ist, ein Mobilfunkgerät zu identifizieren, das durch den Schlüssel angegebenen elektronischen Inhalt speichert;
eine Nachricht zu erzeugen, die an das durch die Mobilfunkgerätekennung identifizierte Mobilfunkgerät gerichtet ist, wobei die Nachricht dafür konfiguriert ist, Zugriff auf den elektronischen Inhalt anzufordern;
eine Antwort zu verarbeiten, die von dem durch die Mobilfunkgerätekennung identifizierten Mobilfunkgerät empfangen wird, wobei die Antwort eine IP-Adresse einschließt, die das Mobilfunkgerät identifiziert, das die Antwort übertragen hat; und
elektronischen Inhalt zu verarbeiten, der über eine Netzwerkverbindung empfangen wird, die zwischen den Mobilfunkgeräten auf der Grundlage der IP-Adresse eingerichtet wurde.

10. Mobilfunkgerät nach Anspruch 2, worin das Mobilfunkgerät ein Mobilfunktelefon umfasst.

11. Verfahren zum Teilen von elektronischem Inhalt für Mobilfunkgeräte mittels eines Overlay-Netzwerks (100) von Computerknoten (102), die gemäß einer hierarchischen verteilten Hash-Tabelle (DHT) angeordnet sind, umfassend:

in einem paketvermittelten Funkzugangsnetz (112) erfolgendes Verarbeiten einer durch ein Mobilfunkgerät (106, 108) erzeugten Nachricht, wobei die Nachricht einen Schlüssel (310) einschließt, der dafür konfiguriert ist, elektronischen Inhalt für Mobilfunkgeräte zu identifizieren und bei Empfang der Nachricht an einem beliebigen der Computerknoten die Leitweglenkung der Nachricht durch das Overlay-Netzwerk auf der Grundlage der hierarchischen DHT zu ermöglichen; und
Senden der Nachricht an einen oder mehrere der dem paketvermittelten Funkzugangsnetz zugeordneten Computerknoten, wobei das Verfahren **dadurch gekennzeichnet ist, dass**:

das Senden der Nachricht an einen oder mehrere der Computerknoten umfasst: Weiterleiten der Nachricht zu einem in das paketvermittelte Funkzugangsnetz einbezogenen paketvermittelten Kommunikationsunterstützungsknoten (714, 716), wobei der paketvermittelte Kommunikationsunterstützungsknoten dafür konfiguriert ist, einen Teil des Overlay-Netzwerks zu bilden und die Nachricht auf der Grundlage des Schlüssels weiterzuleiten, und ferner umfasst:

als Antwort darauf, dass die Nachricht angibt, dass Schlüsselsuche außerhalb des paketvermittelten Funkzugangsnetzes nicht erlaubt ist: Verhindern, dass die Nachricht das paketvermittelte Funkzugangsnetz verlässt.

12. Paketvermitteltes Funkzugangsnetz (112) zum Teilen von elektronischem Inhalt für Mobilfunkgeräte mittels eines Overlay-Netzwerks (100) von Computerknoten (102), die gemäß einer hierarchischen verteilten Hash-Tabelle (DHT) angeordnet sind, umfassend:

einen Funkzugangsknoten (712), der dafür konfiguriert ist, eine durch ein Mobilfunkgerät (106, 108) erzeugte Nachricht zu empfangen, wobei die Nachricht einen Schlüssel (310) einschließt, der dafür konfiguriert ist, elektronischen Inhalt für Mobilfunkgeräte zu identifizieren und bei Empfang der Nachricht an einem beliebigen der Computerknoten die Leitweglenkung der Nachricht durch das Overlay-Netzwerk auf der Grundlage der hierarchischen DHT zu ermöglichen; und
einen paketvermittelten Kommunikationsunterstützungsknoten (714, 716), der dafür konfiguriert ist, die Nachricht zu verarbeiten und an einen oder mehrere der dem paketvermittelten Funkzugangsnetz zugeordneten Computerknoten zu senden, wobei das paketvermittelte Funkzugangsnetz **dadurch gekennzeichnet ist, dass**:

der paketvermittelte Kommunikationsunterstützungsknoten ferner dafür konfiguriert ist, einen Teil des Overlay-Netzwerks zu bilden und die Nachricht auf der Grundlage des Schlüssels weiterzuleiten, und dafür konfiguriert ist, als Antwort darauf, dass die Nachricht angibt, dass Schlüsselsuche außerhalb des paketvermittelten Funkzugangsnetzes nicht erlaubt ist, zu verhindern, dass die Nachricht das paketvermittelte Funkzugangsnetz verlässt.

13. Paketvermitteltes Funkzugangsnetz nach Anspruch 12, worin der paketvermittelte Kommunikationsunterstützungsknoten dafür konfiguriert ist, eine Inhaltsregistrierungsnachricht zu verarbeiten, die dafür konfiguriert ist, das Mobilfunkgerät und durch das Mobilfunkgerät gespeicherten elektronischen Inhalt, für das Teilen dessen das Mobilfunkgerät konfiguriert ist, zu identifizieren.

14. Paketvermitteltes Funkzugangsnetz nach Anspruch 12, worin der paketvermittelte Kommunikationsunterstützungsknoten dafür konfiguriert ist, eine Inhaltsanforderungsnachricht zu verarbeiten, die dafür konfiguriert ist, durch das Mobilfunkgerät angeforderten elektronischen Inhalt zu identifizieren.

15. Paketvermitteltes Funkzugangsnetz nach Anspruch 12, worin der paketvermittelte Kommunikationsunterstützungsknoten dafür konfiguriert ist, eine Inhaltsderegistrierungsnachricht zu verarbeiten, die dafür konfiguriert ist, das Mobilfunkgerät und durch das Mobilfunkgerät gespeicherten elektronischen Inhalt, für das Teilen dessen das Mobilfunkgerät nicht mehr konfiguriert ist, zu identifizieren.

16. Paketvermitteltes Funkzugangsnetz nach Anspruch 12, worin der paketvermittelte Kommunikationsunterstützungsknoten ferner dafür konfiguriert ist, eine vom Overlay-Netzwerk empfangene Antwortnachricht zu verarbeiten, wobei die Antwortnachricht dafür konfiguriert ist, anzugeben, ob einer oder mehrere der Computerknoten einen Datensatz verwaltet, der zum Schlüssel passt.

**Revendications**

1. Procédé destiné à partager du contenu électronique de dispositif mobile par l'intermédiaire d'un réseau dédié (100) de noeuds informatiques (102) agencés selon une table de hachage distribuée hiérarchique (DHT), comprenant les étapes ci-dessous consistant à :

   générer un message, par le biais d'un dispositif mobile (106, 108), le message comprenant une clé (310) configurée de manière à identifier du contenu électronique de dispositif mobile et à permettre l'acheminement du message sur la base de la table DHT hiérarchique à travers le réseau dédié lors de la réception du message au niveau de l'un quelconque des noeuds informatiques ; et
   transmettre le message à un réseau d'accès radio à commutation de paquets (112), le réseau d'accès radio à commutation de paquets étant configuré de manière à envoyer le message à un ou plusieurs des noeuds informatiques, le procédé étant **caractérisé en ce que** :

   l'étape consistant à générer le message consiste à générer un message de demande de contenu configuré de manière à identifier du contenu électronique demandé par le dispositif mobile, et à indiquer, dans le message de demande de contenu, un niveau de la table DHT hiérarchique au-delà duquel une recherche de clé n'est pas autorisée.

2. Dispositif mobile (106, 108) destiné à partager du contenu électronique de dispositif mobile par l'intermédiaire d'un réseau dédié (100) de noeuds informatiques (102) agencés selon une table de hachage distribuée hiérarchique (DHT), comprenant :

   un processeur (114) configuré de manière à générer un message comprenant une clé (310) configurée de manière à identifier du contenu électronique de dispositif mobile et à permettre l'acheminement du message sur la base de la table DHT hiérarchique à travers le réseau dédié lors de la réception du message au niveau de l'un quelconque des noeuds informatiques ; et
   un montage de circuits radio (118) configurés de manière à transmettre le message à un réseau d'accès radio à commutation de paquets (112), le réseau d'accès radio à commutation de paquets étant configuré de manière à envoyer le message à un ou plusieurs des noeuds informatiques, le dispositif mobile étant **caractérisé en ce que** :

   le processeur est configuré de manière à générer un message de demande de contenu configuré de manière à identifier du contenu électronique demandé par le dispositif mobile, et configuré de manière à indiquer, dans le message de demande de contenu, un niveau de la table DHT hiérarchique au-delà duquel une recherche de clé n'est pas autorisée.

3. Dispositif mobile selon la revendication 2, dans lequel le processeur est configuré de manière à générer un message d'enregistrement de contenu configuré de manière à identifier le dispositif mobile et du contenu électronique stocké par le dispositif mobile que le dispositif mobile est configuré de manière à partager.

4. Dispositif mobile selon la revendication 3, dans lequel le processeur est configuré de manière à générer automatiquement le message d'enregistrement de contenu en réponse au fait qu'un dossier prédéterminé dans le dispositif mobile répertorie nouvellement le contenu électronique.

5. Dispositif mobile selon la revendication 3, dans lequel le processeur est en outre configuré de manière à générer à nouveau le message d'enregistrement de contenu en réponse à la mise sous tension du dispositif mobile.

6. Dispositif mobile selon la revendication 2, dans lequel le processeur est configuré de manière à générer un message d'annulation d'enregistrement de contenu configuré de manière à identifier le dispositif mobile et du contenu électronique stocké par le dispositif mobile que le dispositif mobile n'est plus configuré de manière à partager.

7. Dispositif mobile selon la revendication 2, dans lequel le processeur est configuré de manière à indiquer si une recherche de clé est autorisée au niveau d'un opérateur réseau (200), au niveau national (202) ou au niveau mondial (204).

8. Dispositif mobile selon la revendication 2, dans lequel le processeur est en outre configuré de manière à traiter un message de réponse reçu à partir du réseau dédié, le message de réponse étant configuré de manière à indiquer si un ou plusieurs des noeuds informatiques conserve(nt) un enregistrement correspondant à la clé.

9. Dispositif mobile selon la revendication 8, dans lequel le processeur est configuré de manière à :

récupérer un identifiant de dispositif mobile (312) à partir du message de réponse, l'identifiant de dispositif mobile étant configuré de manière à identifier un dispositif mobile stockant du contenu électronique indiqué par la clé ;

générer un message destiné au dispositif mobile identifié par l'identifiant de dispositif mobile, le message étant configuré de manière à demander un accès au contenu électronique ;

traiter une réponse reçue à partir du dispositif mobile identifié par l'identifiant de dispositif mobile, la réponse incluant une adresse IP identifiant le dispositif mobile ayant transmis la réponse ; et

traiter du contenu électronique reçu sur une connexion réseau établie entre les dispositifs mobiles sur la base de l'adresse IP.

10. Dispositif mobile selon la revendication 2, dans lequel le dispositif mobile comprend un téléphone mobile.

11. Procédé destiné à partager du contenu électronique de dispositif mobile par l'intermédiaire d'un réseau dédié (100) de noeuds informatiques (102) agencés selon une table de hachage distribuée hiérarchique (DHT), comprenant les étapes ci-dessous consistant à :

traiter, au niveau d'un réseau d'accès radio à commutation de paquets (112), un message généré par un dispositif mobile (106, 108), le message comprenant une clé (310) configurée de manière à identifier du contenu électronique de dispositif mobile et à permettre l'acheminement du message sur la base de la table DHT hiérarchique à travers le réseau dédié lors de la réception du message au niveau de l'un quelconque des noeuds informatiques ; et

envoyer le message à un ou plusieurs des noeuds informatiques associés au réseau d'accès radio à commutation de paquets, le procédé étant **caractérisé en ce que** :

l'étape d'envoi du message à un ou plusieurs des noeuds informatiques comprend l'étape consistant à acheminer le message à un noeud de prise en charge de communications à commutation de paquets (714, 716) inclus dans le réseau d'accès radio à commutation de paquets, le noeud de prise en charge de communications à commutation de paquets étant configuré de manière à former une partie du réseau dédié et à acheminer le message sur la base de la clé, et comprenant en outre l'étape ci-dessous consistant à :

empêcher le message de quitter le réseau d'accès radio à commutation de paquets en réponse au fait que le message indique qu'une recherche de clé n'est pas autorisée à l'extérieur du réseau d'accès radio à commutation de paquets.

12. Réseau d'accès radio à commutation de paquets (112) destiné à partager du contenu électronique de dispositif mobile par l'intermédiaire d'un réseau dédié (100) de noeuds informatiques (102) agencés selon une table de hachage distribuée hiérarchique (DHT), comprenant :

un noeud d'accès radio (712) configuré de manière à recevoir un message généré par un dispositif mobile (106, 108), le message comprenant une clé (310) configurée de manière à identifier du contenu électronique de dispositif mobile et à permettre l'acheminement du message sur la base de la table DHT hiérarchique à travers le réseau dédié lors de la réception du message au niveau de l'un quelconque des noeuds informatiques ; et un noeud de prise en charge de communications à commutation de paquets (714, 716) configuré de manière à traiter le message et à envoyer le message à un ou plusieurs des noeuds informatiques associés au réseau d'accès radio à commutation de paquets, le réseau d'accès radio à commutation de paquets étant **caractérisé en ce que** :

le noeud de prise en charge de communications à commutation de paquets est en outre configuré de manière à former une partie du réseau dédié et à acheminer le message sur la base de la clé, et est configuré de manière à empêcher le message de quitter le réseau d'accès radio à commutation de paquets en réponse au fait que le message indique qu'une recherche de clé n'est pas autorisée à l'extérieur du réseau d'accès radio à commutation de paquets.

13. Réseau d'accès radio à commutation de paquets selon la revendication 12, dans lequel le noeud de prise en charge de communications à commutation de paquets est configuré de manière à traiter un message d'enregistrement de contenu configuré de manière à identifier le dispositif mobile et du contenu électronique stocké par le dispositif mobile que le dispositif mobile est configuré de manière à partager.

14. Réseau d'accès radio à commutation de paquets selon la revendication 12, dans lequel le noeud de prise en charge de communications à commutation de paquets est configuré de manière à traiter un message de demande de contenu configuré de manière à identifier du contenu électronique demandé par le dispositif mobile.

15. Réseau d'accès radio à commutation de paquets selon la revendication 12, dans lequel le noeud de prise en charge de communications à commutation de paquets est configuré de manière à traiter un message d'annulation d'enregistrement de contenu configuré de manière à identifier le dispositif mobile et du contenu électronique stocké par le dispositif mobile que le dispositif mobile n'est plus configuré de manière à partager.

16. Réseau d'accès radio à commutation de paquets selon la revendication 12, dans lequel le noeud de prise en charge de communications à commutation de paquets est en outre configuré de manière à traiter un message de réponse reçu à partir du réseau dédié, le message de réponse étant configuré de manière à indiquer si un ou plusieurs des noeuds informatiques conserve(nt) un enregistrement correspondant à la clé.

PACKET-SWITCHED DATA NETWORK 104

- KEY (A)
- ID (A)
- ESN (A)

110

102

100

PACKET-SWITCHED RADIO ACCESS NETWORK 112

B 108

RADIO CIRCUITRY 118

PROCESSOR 114

MEMORY 116

A 106

RADIO CIRCUITRY 118

PROCESSOR 114

MEMORY 116

ELECTRONIC CONTENT

*FIG. 1*

**FIG. 2**

WORLDWIDE LEVEL

COUNTRYWIDE LEVEL

OPERATOR NETWORK LEVEL

EP 2 153 625 B1

300

| MESSAGE HEADER 302 | | | MESSAGE BODY 304 | | | | |
|---|---|---|---|---|---|---|---|
| . . . | FLAG BIT 306 | . . . | MESSAGE TYPE 308 | KEY 310 | MOBILE DEVICE IDENTIFIER 312 | ESN/MAC 314 | DHT ROUTING LEVEL 316 |

**FIG. 3**

GENERATE FILE SHARING MESSAGE
AT MOBILE DEVICE — 400

TRANSMIT THE MESSAGE
TO A RADIO ACCESS NETWORK
COUPLED TO THE MOBILE DEVICE — 402

IDENTIFY MESSAGE AS A FILE
SHARING MESSAGE
AT THE RADIO ACCESS NETWORK — 404

SEND THE MESSAGE
TO A LOCAL DHT RING ASSOCIATED WITH
THE RADIO ACCESS NETWORK — 406

**FIG. 4**

RECEIVE MOBILE DEVICE FILE SHARING
MESSAGE AT HIERARCHICAL DHT NODE
ASSOCIATED WITH THE MESSAGE — 500

IDENTIFY MESSAGE TYPE — 502

PROCESS THE MESSAGE BASED ON
THE TYPE OF MESSAGE — 504

*FIG. 5*

**FIG. 6**

**FIG. 7**

EP 2 153 625 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2006053580 A